# EUROPEAN PATENT SPECIFICATION

(11) **EP 1 177 636 B1**
(45) Date of publication and mention of the grant of the patent: **24.03.2004**
(21) Application number: 00903185.7
(22) Date of filing: 10.01.2000
(51) Int. Cl.: H04B 1/38, H04B 7/185

(54) **SATELLITE COMMUNICATION CARD**
KARTE FÜR SATELITTENKOMMUNIKATION
CARTE DE TELECOMMUNICATION PAR SATELLITE

(30) Priority: 23.03.1999 US 274953
(43) Date of publication of application: 06.02.2002
(73) Proprietor: Gilat Satellite Networks Ltd., 49130 Petach Tikva (IL)
(72) Inventor: BEN BASSAT, Itzhak, 55900 Ganey Tikva (IL); OPHIR, Ido, 43316 Raanana (IL); BONEH, Rafi, 67949 Tel Aviv (IL); GAL, Yossi, 27121 Karmiel (IL); GLDFARB, Ariel, 46440 Herzliya (IL); MARCUS, Tal, 49402 Petach Tikva (IL); SHAFIR, Ofer, 48611 Rosh Haayin (IL); RAHAMIN, David, 52551 Ramat Gan (IL); COMFORTI, Amir, 32545 Haifa (IL); HAYOUN, Yariv, 72905 Nir Zvi (IL); SHEICH, Oren, 20692 Yokneam (IL); RIDEL, Eran, 48053 Rosh Haayin (IL)
(74) Representative: Fenlon, Christine Lesley
(86) International application number: PCT/US2000/000453
(87) International publication number: WO 2000/057625

(56) References cited:
- EP-A- 0 734 140
- WO-A-94/29968
- US-A- 5 192 999
- US-A- 5 367 571
- US-A- 5 519 403
- US-A- 5 534 941
- US-A- 5 628 055
- US-A- 5 809 067
- US-A- 5 832 247

## Description

### FIELD AND BACKGROUND OF THE INVENTION

The present invention relates generally to satellite communications, and specifically to personal computer cards for use in satellite communication by radio frequency.

Very small aperture terminals (VSATs), comprising a small satellite dish or flat-plate antenna and appropriate modulating and demodulating hardware coupled to a dedicated computer, are known in the art as means for transferring data directly between locations via a satellite. VSATs are typically used for data exchange in point-to-multipoint data networks, such as automated teller machines (ATMs) and point-of-sale systems, and may also be used for other types data transfer such as direct video broadcasting (DVB).

Personal computer cards capable of receiving signals directly from satellite transmissions are also known in the art. For example, Gilat Satellite Networks Ltd., of Petah Tikva, Israel, produces a satellite receiver card called "SkySurfer" for installation in a personal computer. The card plugs into an industry-standard PCI bus, and is designed to receive direct video broadcasts using a coaxial cable connected to a dish antenna.

European patent application EP 0-734-140 describes a portable satellite communications terminal based on a personal computer (PC). An interface card is inserted into the PC, enabling the PCT to communicate with a satellite antenna through an external modulation/demodulation unit followed by an external radio frequency (RF) subsystem coupled to the antenna.

US-A-5809067 discloses an interface card with both a receiver and a transmitter, which has radio frequency circuitry to process radio frequency signals. It is particularly suitable for wireless communication, without being specific to satellite communication.

### SUMMARY OF THE INVENTION

It is an object of some aspects of the present invention to provide apparatus and methods for signal transmission from a personal computer.

It is a further object of some aspects of the present invention to provide apparatus and methods for communication between a personal computer and a remote transmitter/receiver via satellite.

The invention is defined in the independent claims, to which reference should now be made. Advantageous features are presented in the sub-claims.

In preferred embodiments of the present invention, the transmitter card is a plug-in communications card in a PC which generates modulated radio fresuency (RF) signals, which are conveyed via a coaxial cable to a power amplifier and an uponverter of an antenna system, for transmission via satellite. The card comprises a power connector which enables the power from a DC power supply to be conveyed via the card and the cable to the antenna system. Most preferably, the power supply is external to the computer. Thus signals and power to operate the upconverter and the power amplifier are transferred on the coaxial cable. The card plugs into an industry-standard bus in the PC, which controls the card's operation and conveys data to the card for transmission via the satellite.

The communications card comprises a frequency synthesizer for generating and transmitting the RF signals, preferably in a range between about 950 MHz and 3000 MHz or in any sub-range therein. The signals are conveyed via the coaxial cable to the upconverter and the power amplifier, which are preferably contained in the antenna system. The power level of the signals from the synthesizer is preferably of the order of 1 mW. The upconverter and power amplifier convert the RF signals to higher frequencies and higher power, for transmission by an external dish or flat plate antenna. Most preferably, the signals are modulated by a keying modulator, whose modulation scheme is user-selectable according to any standard modulation system, under control of the PC.

Before modulation, the signals are encoded by an encoder, also under the control of the PC, preferably using forward error correction (FEC) encoding or concatenated coding.

In some preferred embodiments of the present invention, the auxiliary bus is a fast interface bus and the communications card comprises a fast interface bus connector, which enables the communications card to communicate directly with the receiver card without needing to go through the PC bus. Preferably, a fast parallel data bus is used as the fast interface bus. Most preferably, the communications card uses the fast interface bus to communicate directly with a receiver card, having a corresponding fast interface bus connector, installed in the PC. The fast interface bus may be used to transfer a synchronizing clock recovered from signals received by the receiver card, and transmissions from the communications card may be timed accordingly.

The transmitter card may include:
a circuit board which plugs into the personal computer and which is coupled to exchange data via an industry-standard bus in the personal computer; and
radio frequency modulation circuitry on the circuit board, which receives the data and transmits radio frequency signals responsive thereto.

Preferably, the circuitry includes a frequency synthesizer generating the radio frequency signals.

Preferably, the frequency generated by the frequency synthesizer is set by a controller on the circuit board.

Alternatively, the frequency generated by the frequency synthesizer is set by conveying instructions via the computer bus.

Preferably, the card is coupled to an external antenna system, and includes a connector, through which a DC source external to the card powers the antenna system.

Preferably, the frequency modulation circuitry is coupled to convey the radio frequency signals to the antenna system via the connector.

Preferably, the modulation circuitry modulates the transmitted signals according to a predefined protocol in accordance with a command couveyed to the card via the industry-standard bus.

Alternatively, the modulation circuitry includes an encoder which encodes error correction into the transmitted signals according to a predefined protocol in accordance with a command ccnveyed to the card via the industry-standard bus.

Preferably, the signals are transmitted to a satellite.

Preferably, the communication card conveys a synchronizing signal via the auxiliary connector. The system may be a satellite transceiver for a personal computer.

Preferably, the transmitter card and the receiver card include respective connectors coupling the cards to the auxiliary bus.

Preferably, conveying data to the card includes determining a frequency band of the signal.

Alternatively, the method includes:
mounting a power connector on the card; and
powering an antenna system external to the card via the power connector.

Preferably, transmitting the radio frequency signal includes modulate the signal in accordance with a modulation scheme determined responsive to a command conveyed via the bus.

Alternatively, transmitting the radio frequency signal includes encoding an error correction onto the signal in accordance with an encoding scheme determined responsive to a command conveyed via the bus.

Alternatively, the method includes connecting the transmitter card to at least one other card via an auxiliary connector, such that signals pass between the cards without passing through the industry-standard bus.

Preferably, transmitting the signal includes transmitting the signal to a satellite.

Preferably, receiving radio frequency signals includes conveying a synchronizing signal from the receiver card to the transmitter card via the auxiliary bus.

The present invention will be more fully understood from the following detailed description of the preferred embodiments thereof, taken together with the drawings in which:

### BRIEF DESCRIPTION OF THE DRAWINGS

FIG. 1 is a schematic block diagram of a communications terminal coupled to an antenna system, which does not form part of the scope of, but serves to explain the invention;
FIG. 2 is a schematic block diagram of a personal computer RF transmission card which does not form part of the scope of, but serves to explain the present invention.
FIG. 3 is a schematic block diagram of a personal computer RF transmission card coupled to a PC receiver card, in accordance with a preferred embodiment of the present invention.

### DESCRIPTION OF THE PREFERRED EMBODIMENTS

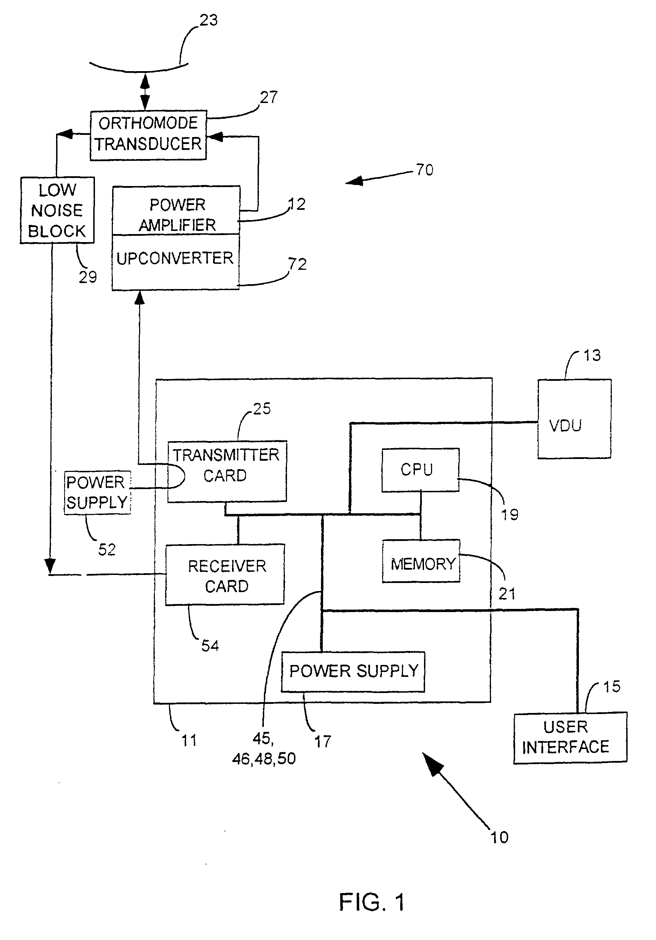

Reference is now made to Figure 1, which is a schematic block diagram of a communications terminal **10** coupled to an antenna system **70**.

In terminal **10** a transmitter card **25** or **60** is installed in a vacant slot of an industry-standard bus **45**, such as a PCI bus, comprising an address bus **46**, a data/control signal bus **48**, and a power bus **50**, as well as additional lines, of a personal computer **11**. The busses of the computer are in communication with corresponding busses of the card, and the output of the card is fed to antenna system **70.** The operation of transmitter cards **25** and **60** is described in detail hereinbelow.

Preferably, computer **11** comprises the following standard components: a video display unit (VDU) **13,** a user interface device **15** comprising a mouse and/or a keyboard, a central processing unit (CPU) **19** such as an Intel Pentium processor, a memory **21** comprising volatile (generally RAM) memory and non-volatile memory, such as a hard disk, and a power supply **17.** Power supply **17** powers the abovementioned standard components and the transmitter card. Preferably, personal computer **11** also comprises a receiver card **54,** receiving its input from antenna system **70.** Receiver card **54** is installed in a vacant slot of computer **11** and is connected thereby to bus **45.**

Preferably, antenna system **70** comprises the following industry-standard components: a dish or flat plate antenna **23,** an orthomode transducer **27,** a low noise block **29,** an upconverter **72,** and a power amplifier **12.** Transducer **27** directs signals received by antenna **23** to low noise block **29**, wherein the received signals are amplified and downconverted to a lower frequency, and are then transferred to receiver card **54**. Upconverter **72** converts transmitted signals from transmitter card **25** or **60** to a higher frequency range, typically a range in the Ku band, and the converted signals are then amplified in power amplifier **12.** The converted signals are transferred via transducer **27** for transmission by antenna **23.** Most preferably, power for upconverter **72** and amplifier **12** is supplied from a power supply **52** via. transmitter card **25** or **60,** as described below.

As will be seen below, transmitter cards **25** and **60** are similar. The main difference between transmitter cards **25** and **60** is that transmitter card **25** communicates with receiver card **54** exclusively via bus **45**, whereas transmitter card **60** in accordance with a preferred embodiment of the invention also communicates with receiver card **54** via a fast interface bus connector, described below, that enables the exchange of data between transmitter card **60** and receiver card **54** without the delays associated with bus **45.**

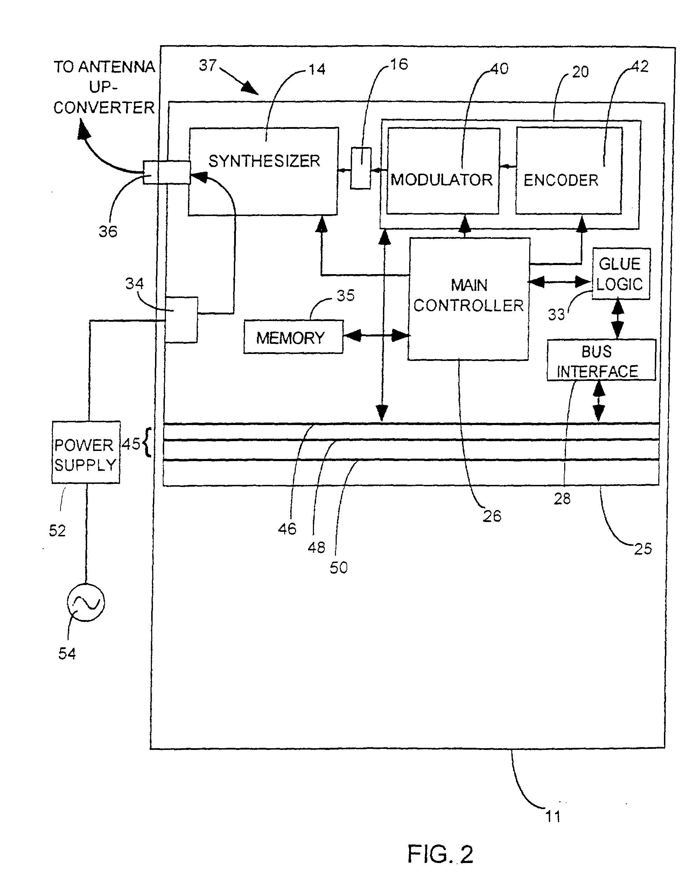

Figure 2 is a schematic block diagram of transmitter card **25**. Preferably, all active components of card **25** are powered from power bus **50.** A dedicated programmable main controller **26** controls the functioning of card **25.** Most preferably, controller **26** is a high performance integrated communications controller, such as a QUICC 68360 produced by Motorola Inc., of Phoenix, Arizona. Controller **26** is provided with a memory **35** for data storage. Controller **26** communicates with busses **46, 48,** and **50** via a glue logic device **33** and a bus interface device **28,** such as a PLX9080, produced by PLX Technology Inc., of Sunnyvale, California. Controller **26** and other components on card **25** communicate with and are controlled by CPU **19** of personal computer **11**, via busses **46** and **48**.

Modulation circuitry **37** comprises frequency synthesizer **14** and associated circuits providing a baseband-modulated input thereto, as described farther hereinbelow. Synthesizer **14** generates and transmits an RF signal, preferably in the range 950 MHz - 3000 MHz, or in any sub-range therein. Most preferably, synthesizer **14** is in a well-shielded and grounded enclosure, in order to substantially reduce noise transfer from the computer to the RF signal, and vice versa, as is known in the art. Preferably, synthesizer **14** is capable of supplying of the order of 1 mW of RF signal power into a connector **36**. Most preferably, connector **36** comprises a **75** ohm impedance F-type connector which in turn supplies the signal via a suitable coaxial cable to antenna system **70**.

To generate on the order of 1 watt of RF power, which is the power typically required for transmission of signals via satellite, system **70** generally requires on the order of 50 watts of DC power at 24 VDC. Preferably, the power is supplied by a DC power supply **52**, external to the card and to the computer, the power supply receiving its power directly from an AC line source 54, preferably operating in the 100-240 VAC range. The DC power is fed to antenna system **70** via a suitable power connector **34** on card **25** and via connector **36.**

Synthesizer **14** generates a specific radio frequency for a chosen channel of communication, for example 1000 MHz, according to commands received from controller **26**. The radio frequency is modulated using baseband signal levels from a digital-analog converter **16**, so that the modulated signal output from the synthesizer is compatible with an industry-standard protocol. Preferably, converter **16** also comprises a low-pass baseband filter to smooth the signals produced during the conversion.

The baseband signals provided to converter **16** are generated by a keying modulator **40** and a forward error correction (FEC) encoder **42**, whose respective functions are described in more detail hereinbelow. Most preferably, the functions of keying modulator **40** and encoder **42** are realized in a single field programmable gate array (FPGA) 20, such as a FLEX6000 produced by Altera Corporation of San Jose, California. FPGA **20** is programmed by main controller **26**, or alternatively from PC bus **46** and/or PC bus **48,** in accordance with instructions stored in memory **21** (Figure 1). Alternatively, two or more field-programmable devices may be used to implement the modulator and encoder, and/or factory-programmed or hard-wired logic may be used for this purpose. Further alternatively, one or more application specific integrated circuits (ASICs) may be used to implement the modulator and encoder.

Keying modulator **40** supplies modulation signals in a standard format, such as one of the phase shift keying (PSK) formats known in the art, for example MSK, BPSK, DPSK, QPSK, or OQPSK. The format may be chosen according to whatever protocol is required by a receiving station, such as a VSAT hub, that is to receive the signals from card **25**, and is loaded into FPGA **20** as described above. It will be understood that where the format needs to be changed, e.g., for transmission to a different receiving station, FPGA **20** may be reprogrammed by the PC, preferably by loading a suitable program into FPGA **20** from memory **21**. The reprogramming may be performed automatically according to a communications channel that is chosen, or may be performed via user interface **15** (Figure 1).

The data input to FPGA **20** is derived from the information to be transmitted, and is received by FPGA **20** from controller **26.** For example, the data may comprise IP packets transmitted on any suitable bus known in the art.

Encoder **42** generates an optional forward error correction (FEC) signal for encoding onto the transmitted signal, by one of the standard methods known in the art such as Viterbi, concatenated, Turbo, or Reed-Solomon coding. Typically, the FEC encoding adds some redundant information to the transmitted signal, for the purpose of improving signal recovery at the receiver. The method chosen is dependent on the requirements of the receiving station, and is programmable into FPGA **20** as described above.

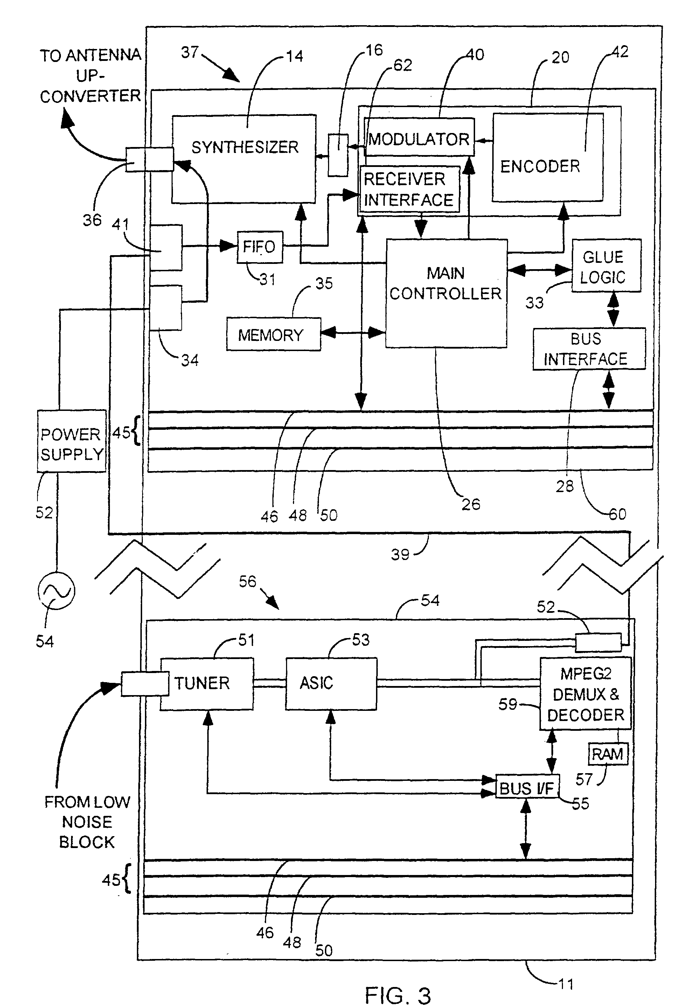

Reference is now made to Figure 3, which is a schematic block diagram of a transmission card **60**, in accordance with a preferred embodiment of the present invention. Apart from the differences described below, card **60** is generally similar to card **25** (Figure 2), and elements indicated by the same reference numerals in both card **25** and card **60** are generally identical in construction and operation. In addition to the elements of card **25**, card **60** comprises an auxiliary connector, to wit, a fast interface bus connector **41**, which is coupled to transfer signals to and from controller **26** via a receiver interface **62** and a first-in first-out (FIFO) buffer **31**. Preferably, interface **62** is a functional block contained in FPGA **20**. Connector **41** enables signals to be sent to and from other cards in the personal computer having similar fast interface bus connectors, without the delay and jitter introduced by standard PC busses.

Most preferably, connector **41** is connected by a cable **39** or mating connector to a similar connector **52** on receiver card **54** installed in the PC and is used to route data and synchronize the operation of the transmitter and receiver cards, for example, as described in the abovementioned U.S. patent application 09/135,502. Receiver card **54** comprises receiver circuitry **56**, described in detail hereinbelow, which communicates directly with connector **41**, and also communicates with busses **46, 48,** and **50**. Preferably, when the receiver and transmitter cards are communicating with a remote receiver/transmitter, such as a VSAT hub, using a slotted communications protocol, the receiver card transfers data to the transmitter card via connector **41**. Controller **26** recovers a synchronizing pulse from the data, and uses the synchronizing pulse to time the transmissions of card **60** according to the protocol being used.

Receiver circuitry **56** most preferably comprises a tuner **51,** an ASIC-based receiver **53**, and an MPEG2 demultiplexer and decoder device **59**. Tuner **51** receives incoming signals, typically digital video broadcast (DVB) signals, from Low Noise Block **29** of antenna system **70** (Fig. 1) and divides the signals to I and Q components, as is known in the art. ASIC-based receiver **53** demodulates and converts the I and Q signals to digital data, and transfers the data to device **59**. Most preferably, the data from ASIC-based receiver **53** is also transferred to connector **52** and from there to card **60**, as described hereinabove. Decoder **59** utilizes a RAM 57 to store interim data used in its operation. Tuner **51,** ASIC-based receiver **53,** and decoder **59** communicate with bus **45** via a bus interface **55**.

It will be appreciated that while the preferred embodiments described above refer specifically to satellite transmission, the transmitter card may be used to generate RF signals for terrestrial transmission, as well. It will thus be appreciated that the preferred embodiments are cited herein by way of example, and the full scope of the invention is limited only by the claims.

## Claims

1. A system for radio frequency communications, comprising:
(a) a transmitter card (60) which plugs into a personal computer and which is coupled to exchange data via an industry-standard bus (45) in the personal computer and which transmits radio frequency signals responsive to the received data; **characterised by** that it further comprises
(b) a receiver card (54) which plugs into the personal computer and which is coupled to transfer data via the industry-standard bus and which receives radio frequency signals and converts the received signals to data for transfer via the bus; and
(c) an auxiliary bus directly connecting the transmitter card and the receiver card such that signals pass between the cards without passing through the industry-standard bus, wherein a synchronising signal is conveyed via the auxiliary bus.

2. A system according to claim 1, wherein the transmitter card includes radio frequency modulation circuitry (37) which receives the data and transmits radio frequency signals responsive thereto.

3. A system according to claim 2, wherein the radio frequency modulation circuitry (37) comprises a frequency synthesizer generating the radio frequency signals.

4. A system according to claim 3, further comprising a controller on the circuit board which sets the frequency generated by the frequency synthesizer.

5. A system according to claim 3, wherein the frequency generated by the frequency synthesizer is set by conveying instructions via the industry-standard bus (45).

6. A system according to any of the preceding claims, wherein the transmitter card is coupled to an external antenna system, and further comprises a connector (36), which connects a DC source external to the transmitter card to the antenna system.

7. A system according to claim 6 when dependent on claim 2, wherein the connector (36) couples the radio frequency modulation circuitry to the antenna system to convey the radio frequency signals.

8. A system according to claim 2, wherein the radio frequency modulation circuitry modulates the transmitted signals in accordance with a command conveyed to the card via the industry-standard bus according to a predefined protocol.

9. A system according to claim 2, wherein the radio frequency modulation circuitry (37) comprises an encoder which encodes error correction into the transmitted signals in accordance with a command conveyed to the card via the industry-standard bus according to a predefined protocol.

10. A system according to any of the preceding claims, the system being a satellite transceiver.

11. A system according to any of the preceding claims, wherein the transmitter card (60) and the receiver card (54) comprise respective connectors coupling the cards to the auxiliary bus.

12. A method for transmitting a radio frequency signal using the card of any of the preceding claims directly from a personal computer, comprising:
(a) mounting the transmitter card (60) in the personal computer;
(b) conveying data to the card via an industry-standard computer bus (45) in the personal computer;
(c) connecting the transmitter card to the receiver card via the auxiliary bus, such that signals pass between the cards without passing through the industry-standard bus (45); wherein a synchronizing signal is conveyed via the auxiliary bus; and
(d) transmitting the radio frequency signal from the transmitter card responsive to the data.

13. A method according to claim 12, wherein conveying data to the card comprises determining a frequency band of the signal.

14. A method according to claim 12, further comprising mounting a power connector on the card so that an antenna system external to the card is connected to an external power source via the power connector.

15. A method according to claim 12, wherein transmitting the radio frequency signal comprises modulating the signal in accordance with a modulation scheme determined responsive to a command conveyed via the bus (45).

16. A method according to claim 12, wherein transmitting the radio frequency signal comprises encoding an error correction onto the signal in accordance with an encoding scheme determined responsive to a command conveyed via the bus (45).

17. A method according to claim 12, wherein transmitting the signal comprises transmitting the signal to a satellite.

18. A method according to claim 12 for transmitting and receiving signals between a satellite and a personal computer comprising:
(a) coupling the transmitter card (60) to an industry-standard bus in the computer;
(b) transmitting radio frequency signals from the transmitter card responsive to data from the bus; **characterised by** comprising the further steps of
(c) coupling the receiver card (54) to the industry-standard bus;
(d) receiving radio frequency signals in the receiver card responsive to data from the bus; and
(e) coupling the transmitter and receiver cards together directly via the auxiliary bus separate from the industry-standard bus (45).

19. A method according to claim 18, wherein receiving radio frequency signals comprises conveying a synchronizing signal from the receiver card (54) to the transmitter card (60) via the auxiliary bus.

## Patentansprüche

1. System für Radiofrequenzkommunikation, aufweisend:
(a) eine Senderkarte (60), die an einen Personalcomputer angeschlossen und so gekoppelt ist, dass Daten über einen Industrie-Standardbus (45) im Personalcomputer ausgetauscht werden und die Radiofrequenzsignale als Antwort auf die empfangenen Daten sendet; **dadurch gekennzeichnet, dass** es des Weiteren Folgendes aufweist:
(b) eine Empfängerkarte (54), die an den Personalcomputer angeschlossen und so gekoppelt ist, dass sie Daten über den Industrie-Standardbus überträgt und Radiofrequnzsignale empfängt und die empfangenen Signale in Daten zur Übertragung durch den Bus umwandelt; und
(c) einen Hilfsbus, der die Senderkarte und die Empfängerkarte direkt verbindet, so dass Signale zwischen den Karten übertragen werden, ohne dass sie über den Industrie-Standardbus laufen, wobei ein Synchronisierungssignal durch den Hilfsbus übertragen wird.

2. System nach Anspruch 1, wobei die Senderkarte eine Radiofrequenz-Modulationsschaltung (37) umfasst, welche die Daten empfängt und als Antwort darauf Radiofrequenzsignale sendet.

3. System nach Anspruch 2, wobei die Radiofrequenz-Modulationsschaltung (37) einen Frequenzsynchronisator umfasst, welcher die Radiofrequenzsignale erzeugt.

4. System nach Anspruch 3, aufweisend eine Steuereinheit auf der Platine, welche die von dem Frequenzgenerator erzeugte Frequenz einstellt.

5. System nach Anspruch 3, wobei die vom Frequenzgenerator erzeugte Frequenz durch Übertragung von Anweisungen über den Industrie-Standardbus (45) eingestellt wird.

6. System nach mindestens einem der vorstehenden Ansprüche, wobei die Senderkarte an ein externes Antennensystem gekoppelt ist; und das einen Anschluss (36) aufweist, der eine DC-Quelle außerhalb der Senderkarte an das Antennensystem koppelt.

7. System nach Anspruch 6, sofern auf Anspruch 2 rückbezogen, wobei der Anschluss (36) die Radiofrequenz-Modulationsschaltung an das Antennensystem koppelt, um die Radiofrequenzsignale zu übertragen.

8. System nach Anspruch 2, wobei die Radiofrequenz-Modulationsschaltung die gesendeten Signale gemäß einem Steuerbefehl moduliert, der an die Karte über den Industrie-Standardbus gemäß einem vorgegebenen Protokoll übertragen wird.

9. System nach Anspruch 2, wobei die Radiofrequenz-Modulationsschaltung (37) einen Kodierer umfasst, der eine Fehlerkorrektur in die übertragenen Signale gemäß einem Steuerbefehl kodiert, der über den Industrie-Standardbus gemäß einem vorgegebenen Protokoll übertragen wird.

10. System nach mindestens einem der vorstehenden Ansprüche, wobei das System ein Satellitentransceiver ist.

11. System nach mindestens einem der vorstehenden Ansprüche, wobei die Sendekarte (60) und die Empfängerkarte (54) jeweilige Anschlüsse umfassen, die die Karten an den Hilfsbus koppeln.

12. Verfahren zum Übertragen eines Radiofrequenzsignals direkt von einem Personalcomputer unter Verwendung der Karte nach mindestens einem der vorstehenden Ansprüche, aufweisend:
(a) Anbringen der Senderkarte (60) im Personalcomputer;
(b) Übertragen von Daten über einen Industrie-Standardbus (45) im Personalcomputer zu der Karte;
(c) Verbinden der Senderkarte mit der Empfängerkarte über den Hilfsbus, so dass Signale zwischen den Karten übertragen werden, ohne über den Industrie-Standardbus (45) zu laufen; wobei ein Synchronisierungssignal über den Hilfsbus übertragen wird; und
(d) Senden des Radiofrequenzsignals von der Senderkarte als Antwort auf die Daten.

13. Verfahren nach Anspruch 12, wobei das Übertragen der Daten zur Karte das Bestimmen eines Frequenzbandes des Signals umfasst.

14. Verfahren nach Anspruch 12, aufweisend das Anbringen eines Netzanschlusses auf der Karte, so dass ein außerhalb der Karte befindliches Antennensystem über den Netzanschluss mit einer externen Strom- und/oder Spannungsquelle verbunden ist.

15. Verfahren nach Anspruch 12, wobei das Senden des Radiofrequenzsignals das Modelieren des Signals gemäß einem Modulationsschema umfasst, das als Antwort auf einen Steuerbefehl festgelegt wird, der über den Bus (45) übertragen wird.

16. Verfahren nach Anspruch 12, wobei das Senden des Radiofrequenzsignals das Kodieren einer Fehlerkorrektur auf dem Signal gemäß einem Kodierungsschema umfasst, das als Antwort auf einen Steuerbefehl festgelegt wird, der über den Bus (45) übertragen wird.

17. Verfahren nach Anspruch 12, wobei das Senden des Signals das Senden das Signals an einen Satelliten umfasst.

18. Verfahren nach Anspruch 12 zum Senden und Empfangen von Signalen zwischen einem Satelliten und einem Personalcomputer, aufweisend:
(a) Koppeln der Senderkarte (60) an einen Industrie-Standardbus in dem Computer;
(b) Senden von Radiofrequenzsignalen von der Senderkarte als Antwort auf Daten von dem Bus; **dadurch gekennzeichnet, dass** es darüber hinaus die folgenden Schritte umfasst:
(c) Koppeln der Empfängerkarte (54) an den Industrie-Standardbus;
(d) Empfangen von Radiofrequenzsignalen in der Empfängerkarte als Antwort auf Daten von dem Bus; und
(e) Koppeln der Sender- und Empfängerkarten direkt über den Hilfsbus aneinander, und zwar getrennt von dem Industrie-Standardbus (45).

19. Verfahren nach Anspruch 18, wobei das Empfangen von Radiofrequenzsignalen das Übertragen eines Synchronisierungssignals von der Empfängerkarte (54) an die Senderkarte (60) über den Hilfsbus umfasst.

## Revendications

1. Système de communications sur fréquence radio comprenant :
(a) une carte émettrice (60) qui se branche sur un ordinateur personnel et qui est raccordée afin d'échanger des données au moyen d'un câblage industriel standard (45) dans l'ordinateur personnel et qui émet des signaux radio réagissant aux données reçues, **caractérisé en ce qu'**il comprend de plus,
(b) une carte réceptrice (54) qui se branche dans l'ordinateur personnel et qui est raccordée afin de transférer des données au moyen du câblage industriel standard et qui reçoit des signaux radios et convertit les signaux reçus en données afin de les transférer au moyen du câblage, et
(c) un câblage auxiliaire connectant directement la carte émettrice et la carte réceptrice de façon à ce que les signaux passent entre les cartes sans passer par le câblage industriel standard, où un signal de synchronisation est convoyé au moyen du câblage auxiliaire.

2. Système selon la revendication 1, **caractérisé en ce que** la carte émettrice inclut un circuit de modulation (37) de la fréquence radio qui reçoit les données et transmet des signaux radio réactifs à ces données.

3. Système selon la revendication 2, **caractérisé en ce que** le circuit de modulation (37) de la fréquence radio comprend un synthétiseur de fréquence générant les signaux radio.

4. Système selon la revendication 3, comprenant de plus un contrôleur sur le tableau de circuit qui règle la fréquence générée par le synthétiseur de fréquence.

5. Système selon la revendication 3, **caractérisé en ce que** la fréquence générée par le synthétiseur de fréquence est réglée par le convoyage d'instructions au travers du câblage industriel standard (45).

6. Système selon l'une quelconque des revendications précédentes, **caractérisé en ce que** la carte émettrice est raccordée à un système d'antenne externe, et comprend de plus un connecteur (36), qui connecte une source DC externe à la carte émettrice au système d'antenne.

7. Système selon la revendication 6 quand elle dépendante de la revendication 2, **caractérisé en ce que** le connecteur (36) raccorde le circuit de modulation de la fréquence radio au système d'antenne afin de convoyer les signaux radio.

8. Système selon la revendication 2, **caractérisé en ce que** le circuit de modulation de la fréquence radio module les signaux transmis en accord avec un ordre convoyé à la carte au travers du câblage industriel standard selon un protocole prédéfini.

9. Système selon la revendication 2, **caractérisé en ce que** le circuit de modulation de la fréquence radio (37) comprend un codeur qui code la correction d'erreur dans les signaux transmis en accord avec un ordre convoyé à la carte au travers du câblage industriel standard selon un protocole prédéfini.

10. Système selon l'une quelconque des revendications précédentes, le système étant un émetteur-récepteur satellite.

11. Système selon l'une quelconque des revendications précédentes, **caractérisé en ce que** la carte émettrice (60) et la carte réceptrice (54) comprennent des connecteurs respectifs raccordant les cartes au câblage auxiliaire.

12. Méthode pour la transmission d'un signal radio utilisant la carte d'une quelconque des revendications précédentes directement depuis un ordinateur personnel, comprenant :
(a) le montage de la carte émettrice (60) dans l'ordinateur personnel,
(b) le convoyage des données vers la carte au moyen d'un câblage d'ordinateur industriel standard (45) dans l'ordinateur personnel,
(c) la connexion de la carte émettrice vers la carte réceptrice au moyen du câblage auxiliaire, de façon à ce que les signaux passent entre les cartes sans passer par le câblage industriel standard (45), où un signal de synchronisation est convoyé au moyen du câblage auxiliaire, et
(d) la transmission du signal radio depuis la carte émettrice en réponse aux données.

13. Méthode selon la revendication 12, **caractérisée en ce que** le convoyage des données vers la carte comprend la détermination d'une bande de fréquence du signal.

14. Méthode selon la revendication 12, comprenant de plus le montage d'une prise de courant sur la carte de façon à ce qu'un système d'antenne externe à la carte soit connecté à une source de courant externe par la prise de courant.

15. Méthode selon la revendication 12, **caractérisée en ce que** la transmission du signal radio comprend la modulation du signal en accord avec un schéma de modulation déterminé réactif à un ordre convoyé au moyen du câblage (45).

16. Méthode selon la revendication 12, **caractérisée en ce que** la transmission du signal radio comprend le codage d'une correction d'erreur dans le signal en accord avec un schéma de codage déterminé réactif à un ordre convoyé au moyen du câblage (45).

17. Méthode selon la revendication 12, **caractérisée en ce que** la transmission du signal comprend la transmission du signal à un satellite.

18. Méthode selon la revendication 12 pour la transmission et la réception de signaux entre un satellite et un ordinateur personnel comprenant :
(a) le raccordement de la carte émettrice (60) à un câblage industriel standard dans l'ordinateur,
(b) la transmission de signaux radio depuis la carte émettrice réactive aux données provenant du câblage, **caractérisée en ce qu'**elle comprend les étapes suivantes,
(c) le raccordement de la carte réceptrice (54) au câblage industriel standard,
(d) la réception de signaux radio dans la carte réceptrice réactive aux données provenant du câblage, et
(e) le raccordement des cartes réceptrice et émettrice ensemble directement par le câblage auxiliaire isolé du câblage industriel standard (45).

19. Méthode selon la revendication 18, **caractérisée en ce que** la réception des signaux radio comprend le convoyage d'un signal synchronisé depuis la carte réceptrice (54) vers la carte émettrice (60) au moyen du câblage auxiliaire.
